# EUROPEAN PATENT APPLICATION

(11) **EP 3 594 785 A1**
(43) Date of publication of application: **15.01.2020**
(21) Application number: 19185341.5
(22) Date of filing: 09.07.2019
(51) Int. Cl.: G06F 3/01, A63F 13/285

(54) **SYSTEMS AND METHODS FOR PROVIDING AUTOMATIC HAPTIC GENERATION FOR VIDEO CONTENT**

(30) Priority: 09.07.2018 US 201816029876
(71) Applicant: Immersion Corporation, San Jose, CA 95134 (US)
(72) Inventor: WU, Liwen, Montreal, Québec H2W 2R2 (CA); SABOUNE, Jamal, Montreal, Québec H2W 2R2 (CA); CRUZ-HERNANDEZ, Juan Manuel, Montreal, Québec H2W 2R2 (CA)
(74) Representative: McDougall, Robert Campbell

(57) **Abstract**

Systems (100) and methods (200, 300) for automatic haptic generation for video content are disclosed. One illustrative system (100) described herein includes a processor (102) executing non-transitory program code configured to receive (202, 302) an audio signal; identify (204, 304) an audio property associated with the audio signal; receive (206, 308) a video signal; identify (208, 310) a video property associated with the video signal, wherein the video property corresponds to the audio property; determine (210, 314) a haptic effect based at least in part on the audio property and the video property; and output (212, 316) a haptic signal associated with the haptic effect.

## Description

The present application relates to the field of user interface devices. More specifically, the present application relates to automatic haptic generation for video content.

The video-viewing experience has become more immersive over time. Larger screens and more complex sound systems provide an enhanced user experience. However, conventional systems often lack the ability to provide feedback to all the senses, including the sense of touch. For those systems that do provide haptic feedback, the process of creating a set of haptic effects to accompany the video can be time and labor intensive. Systems and methods for providing automatic haptic generation for video content are needed.

Embodiments of the present disclosure comprise systems and methods for providing automatic haptic generation for video content. In a first aspect, there is provided a system that may comprise a processor optionally executing non-transitory program code configured to do one or more of the following: receive an audio signal; identify an audio property associated with the audio signal; receive a video signal; identify a video property associated with the video signal, wherein the video property may correspond to the audio property; determine a haptic effect based at least in part on the audio property and the video property; and output a haptic signal associated with the haptic effect. The system may comprise a haptic output device, and the haptic signal may be output to the haptic output device.

In a second aspect, a method is provided. The method may comprise one or more of the following: receiving an audio signal; identifying an audio property associated with the audio signal; receiving a video signal; identifying a video property associated with the video signal, wherein the video property may correspond to the audio property; determining a haptic effect based at least in part on the audio property and the video property; and outputting a haptic signal associated with the haptic effect.

The second aspect may be modified in any suitable way as described herein, including, but not limited to, any of the optional modifications listed for the sixth aspect.

In a third aspect, there is provided a system comprising a processor executing non-transitory program code configured to receive an audio signal; identify an audio property associated with the audio signal; receive a video signal; identify a video property associated with the video signal, wherein the video property corresponds to the audio property; determine a haptic effect based at least in part on the audio property and the video property; and output a haptic signal associated with the haptic effect.

In a fourth aspect, there is provided a non-transitory computer readable medium comprising program code. When executed by a processor the program code may be configured to cause the processor to do one or more of the following: receive an audio signal; identify an audio property associated with the audio signal; receive a video signal; identify a video property associated with the video signal, wherein the video property optionally corresponds to the audio property; determine a haptic effect based at least in part on the audio property and the video property; and output a haptic signal associated with the haptic effect.

One or more of the first, third and fourth aspects may be modified in any suitable way as described herein, including, but not limited to, any of the optional modifications listed for the fifth aspect.

In a fifth aspect, there is provided a non-transitory computer readable medium comprising program code which when executed by a processor is configured to cause the processor to: receive an audio signal; identify an audio property associated with the audio signal; receive a video signal; identify a video property associated with the video signal, wherein the video property corresponds to the audio property; determine a haptic effect based at least in part on the audio property and the video property; and output a haptic signal associated with the haptic effect.

The first, third, fourth and fifth aspects may be modified in any suitable way disclosed herein, including, but not limited to, any one or more of the following.

The computer-readable medium may further comprise program code, which when executed, is configured to do one or more of the following: determine a first preliminary haptic effect based at least in part on the audio signal; determine a second preliminary haptic effect based at least in part on the audio signal or the video signal; and determine the haptic effect based at least in part on the first preliminary haptic effect and the second preliminary haptic effect. Optionally, the computer-readable medium further comprises program code, which when executed, is configured to filter the audio data or audio signal before identifying the audio property. The computer-readable medium may further comprise program code, which when executed, is configured to do one or more of the following: determine a first likelihood that an event has occurred based on the audio property; and determine a second likelihood that the event has occurred based on the video property. The computer-readable medium optionally comprises program code, which when executed, is configured to confirm the event has occurred if the first likelihood and the second likelihood are both greater than fifty percent. The computer-readable medium may comprise program code, which when executed, is configured to further analyze the audio property and the video property if either the first likelihood or the second likelihood is less than fifty percent. The audio property may comprise one or more of a magnitude, a frequency, an envelope, a spacing, and a peak. The video property may comprise one or more of a color, a motion vector, an edge, a feature point, and a brightness. The computer-readable medium may further comprise program code, which when executed, is configured to extract the video property from pixel data. The computer-readable medium may further comprise program code, which when executed, is configured to perform pre-processing on the video data or video signal or the audio data or audio signal. Pre-processing may comprise filtering. The computer-readable medium optionally comprises program code, which when executed, is configured to extract the audio signal and the video signal from a multimedia file. The audio signal and video signal may be received asynchronously. The computer-readable medium may further comprise program code, which when executed, is configured to assign a relative weight the audio property and to the video property when determining a haptic effect. The relative weight may be assigned statically or dynamically. Optionally, the relative weight is a number between 0 and 100.

In a sixth aspect, there is provided a method comprising: receiving an audio signal; identifying an audio property associated with the audio signal; receiving a video signal; identifying a video property associated with the video signal, wherein the video property corresponds to the audio property; determining a haptic effect based at least in part on the audio property and the video property; and outputting a haptic signal associated with the haptic effect.

The second, sixth and seventh aspects may be modified in any suitable way disclosed herein, including, but not limited to, any one or more of the following.

The method may further comprise one or more of: determining a first preliminary haptic effect based at least in part on the audio signal; determining a second preliminary haptic effect based at least in part on the audio signal or the video signal; and determining the haptic effect based at least in part on the first preliminary haptic effect and the second preliminary haptic effect. The method may comprise analyzing the first and second preliminary haptic effects to determine the haptic effect to be output. The method optionally comprises filtering the audio signal or audio data before identifying the audio property. The method may comprise one or more of the following: determining a first likelihood that an event has occurred based on the audio property; and determining a second likelihood that the event has occurred based on the video property. The method may further comprise confirming the event has occurred if the first likelihood and the second likelihood are both greater than fifty percent. The method optionally comprises further analyzing the audio property and the video property if either the first likelihood or the second likelihood is less than fifty percent. The audio property may comprise one or more of a magnitude, a frequency, an envelope, a spacing, and a peak. The video property may comprise one or more of a color, a motion vector, an edge, a feature point, and a brightness. The method may comprise extracting the video property from pixel data.

In a seventh aspect, there is provided a method comprising: receiving an audio signal and identifying an audio property; receiving a video signal and identifying a video property; determining a haptic effect based on the audio property; determining a haptic effect based on the video property; analyzing the haptic effects based on the audio and video signal to determine the haptic effect to be output; and outputting a haptic signal associated with the haptic effect to be output.

The seventh aspect may be modified in any suitable way as described herein, including, but not limited to, any of the optional modifications listed for the sixth aspect.

These aspects are mentioned not to limit or define the limits of the present subject matter, but to provide examples to aid understanding thereof. In addition, it is envisaged that the aspects may be modified in any suitable way as described herein. For example, it is envisaged that each of the aspects may be taken in combination with one or more of the optional modifications described in respect of any of the other aspects. The aspects are discussed in the Detailed Description, and further description is provided there. Advantages offered by various embodiments or aspects may be further understood by examining this specification and/or by practicing one or more embodiments of the claimed subject matter.

A full and enabling disclosure is set forth more particularly in the remainder of the specification. The specification makes reference to the following appended figures.
Figure 1 shows an illustrative system for generating haptic feedback based on audio and video data.
Figure 2 is a flow chart of method steps for one example embodiment for generating haptic effects based on audio and video.
Figure 3 is a flow chart of method steps for another example embodiment for generating haptic effects based on audio and video.

Reference will now be made in detail to various and alternative illustrative embodiments and to the accompanying drawings. Each example is provided by way of explanation, and not as a limitation. It will be apparent to those skilled in the art that modifications and variations can be made. For instance, features illustrated or described as part of one embodiment may be used in another embodiment to yield a still further embodiment. Thus, it is intended that this disclosure include modifications and variations as come within the scope of the appended claims and their equivalents.

### Illustrative Example of a System for Generating Haptic Effects from Audio and Video

In one illustrative embodiment, a haptic designer is designing haptics for an action movie scene. The haptic designer watches the film on a computer that includes a haptic design tool. The design tool he is using allows him to view the movie and add effects at particular points in time, e.g., on a frame-by-frame basis. The process of adding effects can be done manually (using the tool) or automatically based on properties of the movie.

In automatic mode, the tool uses a combination of audio and video to determine the appropriate haptic effect to add. If the designer were to use an audio- or video-only option, the generated haptics may be overwhelming, e.g., to many effect and thus to "noisy." If the designer were to use a video-only option, the generated haptics may be clean, but the intensity of the haptic effects may not match the various events detected in the movie. Thus a combination of audio and video may provide more meaningful effects.

An embodiment of this invention allows the designer to use a combination audio/video method, which results in more accurate event detection, and the intensity, frequency, and shape of the haptics are more matched to the features of the detected events. Such an option relies on various properties of the audio track, such as magnitude, Mel-frequency cepstral coefficients (MFCCs), Mel log spectrograms, and frequency spectrograms and also various properties of the video track, such as color and motion vectors, that, when combined generate a haptic effect that more accurately reflects the activity in the movie. Once the suggested effects are generated, the haptic designer can revise the effects manually to further improve them. The preceding example is merely illustrative and not meant to limit the claimed invention in any way.

### Illustrative Systems for Haptic Effect Generation using Audio and Video

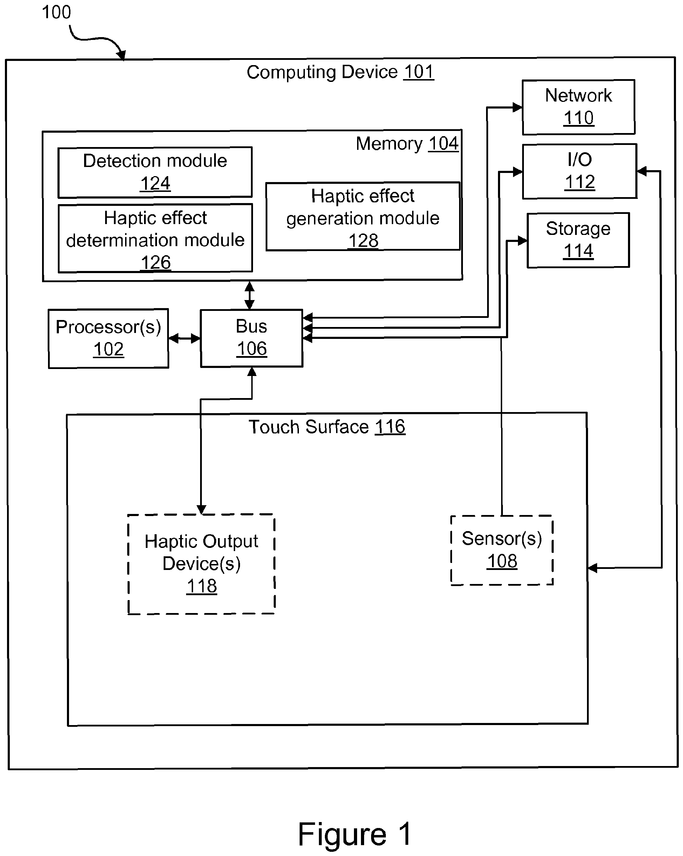

Figure 1 shows an illustrative system 100 for generating haptic effects using audio and video. Particularly, in this example, system 100 comprises a computing device 101 having a processor 102 interfaced with other hardware via bus 106. A memory 104, which can comprise any suitable tangible (and non-transitory) computer-readable medium such as RAM, ROM, EEPROM, or the like, embodies program components that configure operation of the computing device. In this example, computing device 101 further includes one or more network interface devices 110, input/output (I/O) interface components 112, and additional storage 114.

Network device 110 can represent one or more of any components that facilitate a network connection. Examples include, but are not limited to, wired interfaces such as Ethernet, USB, IEEE 1394, and/or wireless interfaces such as IEEE 802.11, Bluetooth, or radio interfaces for accessing cellular telephone networks (e.g., transceiver/antenna for accessing a CDMA, GSM, UMTS, or other mobile communications network(s)).

I/O components 112 may be used to facilitate connection to devices such as one or more displays, touch screen displays, keyboards, mice, speakers, microphones, cameras, and/or other hardware used to input data or output data. Storage 114 represents nonvolatile storage such as magnetic, optical, or other storage media included in device 101.

System 100 further includes a touch surface 116, which, in this example, is integrated into device 101. Touch surface 116 represents any surface that is configured to sense touch input of a user. One or more sensors 108 are configured to detect a touch in a touch area when an object contacts a touch surface and provide appropriate data for use by processor 102. Any suitable number, type, or arrangement of sensors can be used. For example, resistive and/or capacitive sensors may be embedded in touch surface 116 and used to determine the location of a touch and other information, such as pressure. As another example, optical sensors with a view of the touch surface may be used to determine the touch position.

In some embodiments, sensor 108, touch surface 116, and I/O components 112 may be integrated into a single component such as a touch screen display. For example, in some embodiments, touch surface 116 and sensor 108 may comprise a touch screen mounted overtop of a display configured to receive a display signal and output an image to the user. The user may then use the display to both view the movie or other video and interact with the haptic generation design application.

In other embodiments, the sensor 108 may comprise an LED detector. For example, in one embodiment, touch surface 116 may comprise an LED finger detector mounted on the side of a display. In some embodiments, the processor 102 is in communication with a single sensor 108, in other embodiments, the processor 102 is in communication with a plurality of sensors 108, for example, a first touch screen and a second touch screen. The sensor 108 is configured to detect user interaction and, based on the user interaction, transmit signals to processor 102. In some embodiments, sensor 108 may be configured to detect multiple aspects of the user interaction. For example, sensor 108 may detect the speed and pressure of a user interaction and incorporate this information into the interface signal.

Device 101 further comprises a haptic output device 118. In the example shown in Figure 1 haptic output device 118 is in communication with processor 102 and is coupled to touch surface 116. The embodiment shown in Figure 1 comprises a single haptic output device 118. In other embodiments, computing device 101 may comprise a plurality of haptic output devices. The haptic output device may allow a haptic designer to experience effects as they are generated in order to determine if they should be modified in any way before creating the final set of haptic effects for the video.

Although a single haptic output device 118 is shown here, embodiments may use multiple haptic output devices of the same or different type to output haptic effects. For example, haptic output device 118 may comprise one or more of, for example, a piezoelectric actuator, an electric motor, an electro-magnetic actuator, a voice coil, a shape memory alloy, an electro-active polymer, a solenoid, an eccentric rotating mass motor (ERM), or a linear resonant actuator (LRA), a low profile haptic actuator, a haptic tape, or a haptic output device configured to output an electrostatic effect, such as an Electrostatic Friction (ESF) actuator. In some embodiments, haptic output device 118 may comprise a plurality of actuators, for example a low profile haptic actuator, a piezoelectric actuator, and an LRA.

Turning to memory 104, exemplary program components 124, 126, and 128 are depicted to illustrate how a device may be configured to determine and output haptic effects. In this example, a detection module 124 configures processor 102 to monitor touch surface 116 via sensor 108 to determine a position of a touch. For example, module 124 may sample sensor 108 in order to track the presence or absence of a touch and, if a touch is present, to track one or more of the location, path, velocity, acceleration, pressure, and/or other characteristics of the touch over time.

Haptic effect determination module 126 represents a program component that analyzes data regarding audio and video characteristics to select a haptic effect to generate. Particularly, module 126 comprises code that determines, based on the audio or video properties, an effect to generate and output by the haptic output device. Module 126 may further comprise code that selects one or more existing haptic effects to provide in order to assign to a particular combination of audio and video properties. For example, a high-intensity color combined with a high peak sound magnitude may indicate an explosion and thus trigger generation of a strong vibration. Different haptic effects may be selected based on various combination of these features. The haptic effects may be provided via touch surface 116 even in order that the designer can preview the effect and modify it as necessary to better model the scene or frame in the video.

Haptic effect generation module 128 represents programming that causes processor 102 to generate and transmit a haptic signal to haptic output device 118, which causes haptic output device 118 to generate the selected haptic effect. For example, generation module 128 may access stored waveforms or commands to send to haptic output device 118. As another example, haptic effect generation module 128 may receive a desired type of haptic effect and utilize signal processing algorithms to generate an appropriate signal to send to haptic output device 118. As a further example, a desired haptic effect may be indicated along with target coordinates for the texture and an appropriate waveform sent to one or more actuators to generate appropriate displacement of the surface (and/or other device components) to provide the haptic effect. Some embodiments may utilize multiple haptic output devices in concert to simulate a feature. For instance, a variation in texture may be used to simulate crossing a boundary between buttons on an interface while a vibrotactile effect simulates the response when the button is pressed.

### Illustrative Methods for Haptic Effect Generation using Audio and Video

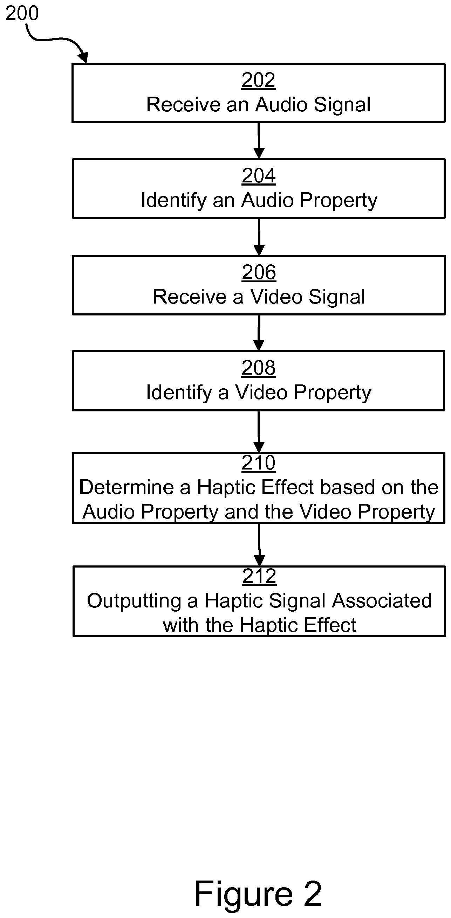

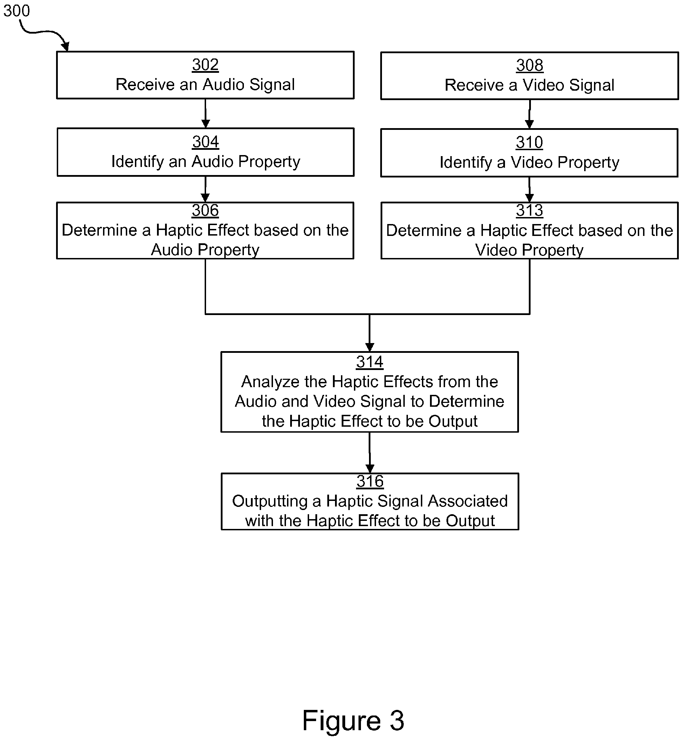

Figures 2 and 3 are flow charts of method steps for example embodiments for generating haptic effects based on audio and video. Figure 2 illustrates a process 200 in which the audio and video signals are processed in series together. In the first step of the process, the haptic effect determination module 126 receives an audio signal 202. For example, the haptic effect determination module 126 may receive the audio track from a movie at a particular timestamp that is stored in a buffer. The audio signal may be received simultaneously with the video, such as in the form of a multimedia file that contains audio and video, or the audio maybe received asynchronously with the video.

The haptic effect determination module 126 then identifies one or more properties of the audio signals 204. Examples of audio properties that may be identified include, but are not limited to, magnitude, frequency, envelope, spacing, and peak. In some embodiments, the audio signal may be preprocessed before audio properties are identified. For example, an embodiment may utilize filters or audio processing algorithms to remove background noise. In another embodiment, certain frames of audio may be ignored if the magnitude is too low or the frequency of the sound frame is outside a preset range. In one embodiment, speech is ignored when creating haptic effects. Thus, a filter is applied that removes the frequencies associated with human speech before attempting to determine haptic effects to associate with the video.

While the process shown in Figure 2 may operate on a particular timestamp, the process may also include comparing properties over time. For example, in one embodiment, several successive frames may be analyzed to determine the change in particular audio properties over time.

The haptic effect determination module 126 next receives a video signal that corresponds to the audio signal, e.g., the two signals are sampled at the same timestamp 206. The haptic effect determination module 126 then identifies one or more properties of the video 208. Prior to or as part of the identification step, and embodiment of this invention may pre-process the video. Such pre-processing may remove irrelevant information from the video signal prior to identification of video properties for which to generate haptic effects. In one embodiment, filters or image processing algorithms are utilized to process pixels for each frame and, for example, replace irrelevant pixels with black color. A color may be irrelevant if the color, for example, is not within a range of colors that is indicative of a particular event.

Examples of video properties that may be identified include motion vectors, edges, feature points, colors and brightness. As is the case with the audio properties described above, the process shown in Figure 2 may operate on a particular timestamp or may also include comparing properties over time. For example, in one embodiment, several successive frames may be analyzed to determine a force vector.

The haptic effect determination module 126 then uses the one or more audio properties and one or more video properties to determine a haptic effect 210. The embodiment then outputs a haptic signal associated with the haptic effect. 212. The determination of haptic effect may be based on a predesigned algorithm. The haptic effect determination module 126 may also suggest a haptic effect which can then be modified by a haptic designer. In some embodiments, the relative weight given to the audio and video properties may vary. For example, in one embodiment, the audio property may be weighted as 60%, while the video property is weighted at 40%. Thus, the generated haptic effect would be more dependent on the sound at a particular time than the video. The relative weight given to the audio and video may be set statically or may be dynamically determined based on other properties of the audio or video, preferences of the user, or based on other variables. In some embodiments, the weight of each of the audio or video may vary between 0 and 100 percent. In such embodiments, the total weight may or may not equal 100. For example, the audio may be set to 50% while the video is set to 55%, giving slightly greater weight to the video.

The process 200 shown in Figure 2 may be executed in real-time or based on a recording of a video. However, it may be advantageous to process the video based on a recording so that various frames can be compared to one another as part of the determination of the haptic effect to associate with a particular time stamp.

Figure 3 is a flow chart of method steps for another example embodiment for generating haptic effects based on audio and video. In the embodiment shown in Figure 3, proposed effects are determined based on the audio and video separately. Then the proposed effects and signals are analyzed together to determine what haptic effect should be output. Any of the steps and features described with respect to Figure 3 may be used with the second, sixth and seventh aspects described above.

As with the process shown in Figure 2, the process 300 begins by receiving an audio signal 302 and identifying one or more audio properties 304. At this point in the process 300, the haptic effect determination module 126 determines a haptic effect based only on the audio property 306.

The haptic effect determination module 126 also receives video signal 308 and identifies one or more video properties 310. At this point in the process 300, the haptic effect determination module 126 determines a haptic effect based only on the video property 312.

The haptic effect determination module 126 then analyzes the two separate haptic effects to determine the haptic effect to be output 314. For example, if the same or a similar effect is proposed based on each of the two different properties (audio and video), the haptic effect determination module 126 will determine that the same or similar haptic should be output. However, if the effects are markedly different, then the haptic effect determination module 126 may weigh one of the audio or video more heavily and determine the final haptic effect accordingly.

For example, in one embodiment, the haptic effect determination module 126 determines with near 100% certainty based on the audio that an explosion has occurred, but none of the video properties suggests an explosion has occurred. The haptic effect determination module would generate and output a haptic signal to a haptic track that reflected an explosion. Similarly, if the video showed an explosion but the explosion were not audible (e.g., the viewpoint is from a character who is deaf), then the haptic effect might still be added to the haptic track. However, if a haptic event is detected as > 50% certainty in one track but < 50% certainty in the other, further analysis is needed to determine if it is a false detection or not. One example in which the video and audio might not match is the case of a potential explosion. Some objects moving in a video may have a color and color intensity that is similar to an explosion. However, the audio may indicate that the object is simply moving at high speed through the frame and thus is not an explosion. By analyzing both tracks, the process 200 is able to make the distinction.

Another example of an event for which separately processing audio and video may not result in an appropriate effect is a collision. In the case of a collision, two objects on screen may merge. However, when the objects merge, it may be that they are passing rather than colliding. However, if the merging of the two objects coincides with a loud sound or a particular type of sound, then the haptic effect determination module is able to identify the merging of the objects in the video as a collision.

In another embodiment, if a haptic signal is detected with less than 50% certainty on both the audio and video tracks, then the haptic effect would not be output to the final haptic track. Various alternatives may be utilized, depending on the type of audio and video being analyzed.

Once the haptic effect determination module 126 has determined the appropriate haptic effect based on the audio and video properties, a haptic signal associated with the haptic effect is output 316.

In some embodiments, the processes shown in Figures 2 and 3 may be repeated for various types of effects. For example, in one embodiment, the process is executed to identify potential explosions. The process is then repeated to identify potential gunshots. Finally, the process is repeated to look for collisions between various objects, such as automobiles. Once the process has been completed for each of these potential events, the various effects are merged onto a final haptic track, which can then be evaluated and modified by the haptic designer.

Embodiments of the invention provide various advantages over conventional generation of haptic effects based on audio or video. For example, embodiments may help to reduce false positive detection. For example, if an explosion is detected using a vision processing algorithm, then a corresponding high peak in audio should occur at the same time frame that confirms the explosion. If the high peak is missing, then the detection of an explosion may have been false.

Embodiments of this invention may also help to reduce false negative detection. For example, an explosion event may occur in the background but not be visible in the video. However, based on audio properties occurring at the corresponding time on the audio track, it may be clear that an explosion did, in fact, occur.

Embodiments of this invention can help to generate more accurate and immersive haptic effects. By combining the vision and audio processing, more properties can be used to tune the generated haptics so as to better match the characteristics of the event to which the haptic effect is associates. And because the haptics may be generated automatically, embodiment of this invention may be advantageous for generating haptics in an economical manner for applications such as mobile devices or for advertisements for gaming.

### General Considerations

The methods, systems, and devices discussed above are examples. Various configurations may omit, substitute, or add various procedures or components as appropriate. For instance, in alternative configurations, the methods may be performed in an order different from that described, and/or various stages may be added, omitted, and/or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims.

Specific details are given in the description to provide a thorough understanding of example configurations (including implementations). However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the spirit or scope of the disclosure.

Also, configurations may be described as a process that is depicted as a flow diagram or block diagram. Although each may describe the operations as a sequential process, many of the operations can be performed in parallel or concurrently. In addition, the order of the operations may be rearranged. A process may have additional steps not included in the figure. Furthermore, examples of the methods may be implemented by hardware, software, firmware, middleware, microcode, hardware description languages, or any combination thereof. When implemented in software, firmware, middleware, or microcode, the program code or code segments to perform the necessary tasks may be stored in a non-transitory computer-readable medium such as a storage medium. Processors may perform the described tasks.

Having described several example configurations, various modifications, alternative constructions, and equivalents may be used without departing from the spirit of the disclosure. For example, the above elements may be components of a larger system, wherein other rules may take precedence over or otherwise modify the application of the invention. Also, a number of steps may be undertaken before, during, or after the above elements are considered. Accordingly, the above description does not bound the scope of the claims.

The use of "adapted to" or "configured to" herein is meant as open and inclusive language that does not foreclose devices adapted to or configured to perform additional tasks or steps. Additionally, the use of "based on" is meant to be open and inclusive, in that a process, step, calculation, or other action "based on" one or more recited conditions or values may, in practice, be based on additional conditions or values beyond those recited. Headings, lists, and numbering included herein are for ease of explanation only and are not meant to be limiting.

Embodiments in accordance with aspects of the present subject matter can be implemented in digital electronic circuitry, in computer hardware, firmware, software, or in combinations of the preceding. In one embodiment, a computer may comprise a processor or processors. The processor comprises or has access to a computer-readable medium, such as a random access memory (RAM) coupled to the processor. The processor executes computer-executable program instructions stored in memory, such as executing one or more computer programs including a sensor sampling routine, selection routines, and other routines to perform the methods described above.

Such processors may comprise a microprocessor, a digital signal processor (DSP), an application-specific integrated circuit (ASIC), field programmable gate arrays (FPGAs), and state machines. Such processors may further comprise programmable electronic devices such as PLCs, programmable interrupt controllers (PICs), programmable logic devices (PLDs), programmable read-only memories (PROMs), electronically programmable read-only memories (EPROMs or EEPROMs), or other similar devices.

Such processors may comprise, or may be in communication with, media, for example tangible computer-readable media, that may store instructions that, when executed by the processor, can cause the processor to perform the steps described herein as carried out, or assisted, by a processor. Embodiments of computer-readable media may comprise, but are not limited to, all electronic, optical, magnetic, or other storage devices capable of providing a processor, such as the processor in a web server, with computer-readable instructions. Other examples of media comprise, but are not limited to, a floppy disk, CD-ROM, magnetic disk, memory chip, ROM, RAM, ASIC, configured processor, all optical media, all magnetic tape or other magnetic media, or any other medium from which a computer processor can read. Also, various other devices may include computer-readable media, such as a router, private or public network, or other transmission device. The processor, and the processing, described may be in one or more structures, and may be dispersed through one or more structures. The processor may comprise code for carrying out one or more of the methods (or parts of methods) described herein.

While the present subject matter has been described in detail with respect to specific embodiments thereof, it will be appreciated that those skilled in the art, upon attaining an understanding of the foregoing may readily produce alterations to, variations of, and equivalents to such embodiments. Accordingly, it should be understood that the present disclosure has been presented for purposes of example rather than limitation, and does not preclude inclusion of such modifications, variations and/or additions to the present subject matter as would be readily apparent to one of ordinary skill in the art.

## Claims

1. A non-transitory computer readable medium comprising program code, which when executed by a processor (102) is configured to cause the processor (102) to:
receive (202, 302) an audio signal;
identify (204, 304) an audio property associated with the audio signal;
receive (206, 308) a video signal;
identify (208, 310) a video property associated with the video signal, wherein the video property corresponds to the audio property;
determine (210, 314) a haptic effect based at least in part on the audio property and the video property; and
output (212, 316) a haptic signal associated with the haptic effect.

2. The computer-readable medium of claim 1, further comprising program code, which when executed, is configured to:
determine (306) a first preliminary haptic effect based at least in part on the audio signal;
determine (313) a second preliminary haptic effect based at least in part on the video signal; and
determine (314) the haptic effect based at least in part on the first preliminary haptic effect and the second preliminary haptic effect.

3. The computer-readable medium of claim 1 or claim 2, further comprising program code, which when executed, is configured to filter the audio signal before identifying (204, 304) the audio property.

4. The computer-readable medium of any preceding claim, further comprising program code, which when executed, is configured to:
determine a first likelihood that an event has occurred based on the audio property; and
determine a second likelihood that the event has occurred based on the video property;
and, optionally:
(i) confirm the event has occurred if the first likelihood and the second likelihood are both greater than fifty percent; and/or
(ii) further analyze the audio property and the video property if either the first likelihood or the second likelihood is less than fifty percent.

5. The computer-readable medium of any preceding claim, wherein
(i) the audio property comprises one or more of a magnitude, a frequency, an envelope, a spacing, and a peak, and/or
(ii) the video property comprises one or more of a color, a motion vector, an edge, a feature point, and a brightness.

6. The computer-readable medium of any preceding claim, further comprising program code, which when executed, is configured to extract the video property from pixel data.

7. The computer-readable medium of any preceding claim, further comprising program code, which when executed, is configured to perform pre-processing on the video signal or the audio signal, the pre-processing optionally comprising filtering.

8. The computer-readable medium of any preceding claim, further comprising program code, which when executed, is configured to extract the audio signal and the video signal from a multimedia file.

9. The computer-readable medium of any preceding claim, wherein the audio signal and video signal are received asynchronously.

10. The computer-readable medium of any preceding claim, further comprising program code, which when executed, is configured to assign a relative weight to the audio property and to the video property when determining a haptic effect, wherein the relative weight is optionally assigned statically or dynamically and the relative weight is optionally a number between 0 and 100.

11. A method (200, 300) comprising:
receiving (202, 302) an audio signal;
identifying (204, 304) an audio property associated with the audio signal;
receiving (206, 308) a video signal;
identifying (208, 310) a video property associated with the video signal, wherein the video property corresponds to the audio property;
determining (210, 314) a haptic effect based at least in part on the audio property and the video property; and
outputting (212, 316) a haptic signal associated with the haptic effect.

12. The method (200, 300) of claim 11, further comprising:
determining (306) a first preliminary haptic effect based at least in part on the audio signal;
determining (313) a second preliminary haptic effect based at least in part on the video signal; and
determining (314) the haptic effect based at least in part on the first preliminary haptic effect and the second preliminary haptic effect.

13. The method (200, 300) of claim 11 or claim 12, further comprising filtering the audio signal before identifying (204, 304) the audio property.

14. The method (200, 300) of any of claims 11 to 13, further comprising:
determining a first likelihood that an event has occurred based on the audio property; and
determining a second likelihood that the event has occurred based on the video property;
and, optionally
(i) confirming the event has occurred if the first likelihood and the second likelihood are both greater than fifty percent; and/or
(ii) further analyzing the audio property and the video property if either the first likelihood or the second likelihood is less than fifty percent.

15. The method (200, 300) of any of claims 11 to 14, further comprising extracting the video property from pixel data.
